# EUROPÄISCHE PATENTSCHRIFT

(11) **EP 1 944 144 B1**
(45) Veröffentlichungstag und Bekanntmachung des Hinweises auf die Patenterteilung: **30.05.2018**
(21) Anmeldenummer: 07105799.6
(22) Anmeldetag: 05.04.2007
(51) Int. Cl.: B27N 1/00, C08L 97/02

(54) **Verfahren zur Herstellung eines cellulosehaltigen Formkörpers**
Method for manufacturing a moulded form containing cellulose
Procédé destiné à la fabrication d'un corps de formage contenant de la cellulose

(30) Priorität: 11.01.2007 DE 102007002454; 11.01.2007 DE 102007002455; 19.01.2007 DE 102007003769
(43) Veröffentlichungstag der Anmeldung: 16.07.2008
(73) Patentinhaber: Fritz Egger GmbH & Co. OG, 6380 St. Johann in Tirol (AT)
(72) Erfinder: Mitter, Roland, 3123 Großrust (AT)
(74) Vertreter: Cohausz & Florack

(56) Entgegenhaltungen:
- EP-A1- 1 900 788
- EP-A2- 0 144 985
- WO-A-2006/051339
- DE-A1- 1 653 167

## Beschreibung

Die Erfindung betrifft ein Verfahren zur Herstellung eines Formkörpers aus cellulosehaltigem Material und einem Bindemittel durch Heißpressen sowie einen nach dem Verfahren hergestellten Formkörper. Insbesondere betrifft die Erfindung ein Verfahren zur Herstellung eines plattenförmigen Holzwerkstoffes wie einer Spanplatte, einer Faserplatte oder einer OSB-Platte sowie einen danach hergestellten Holzwerkstoff.

Bei der Herstellung von gattungsgemäßen Formkörpern wie Span-, Faser- oder OSB-Platten aus cellulosehaltigem Material kommen Bindemittel zum Einsatz. Als Bindemittel sind jene aus der Gruppe der Formaldehydharze vorgesehen, wie sie in Holzwerkstoffen häufig und in großen Mengen zur Anwendung kommen. Zur Bereitstellung des cellulosehaltigen Materials werden Rundholz, Sägenebenprodukte oder Altholz zu Spänen, Fasern oder Strands zerkleinert, gegebenenfalls von Verunreinigungen getrennt, getrocknet und mit dem Bindemittel versetzt. Danach folgt die Bildung einer Späne-, Faser- bzw. Strandmatte, die dann in Takt- oder kontinuierlich arbeitenden Pressen unter Hitze und Druck zu einer Platte gepreßt wird. In der Presse erfolgt die Aushärtung des Bindemittels, wobei stets eine gewisse Menge an Formaldehyd in freier und/oder gebundener Form gebildet wird, das auch noch über mehrere Monate bis wenige Jahre aus dem fertigen Produkt abgegeben werden kann.

Da Formaldehyd aber in vielen Ländern zumindest als gesundheitsgefährdend eingestuft ist oder zumindest in diesbezüglichem Verdacht steht, bestehen für Bauprodukte verschiedene Beschränkungen hinsichtlich der maximal zulässigen Abgabe von Formaldehyd. Bei Holzwerkstoffen besteht in Europa hinsichtlich der maximal zulässigen Formaldehydemission der E1-Standard, wohingegen am asiatischen Markt das F****-Niveau (sprich: F-Four-Star-Niveau) gefordert ist.

Für den europäischen Emissionsstandard E1 sind die Aminoplast-Bindemittel bezüglich Reaktivität, geforderten mechanischen Platteneigenschaften und Formaldehyd-Emission optimiert und stellen die technische Standardlösung dar.

Das F****-Niveau liegt bezüglich der Formaldehyd-Emission größenordnungsmäßig jedoch bei etwa der Hälfte des europäischen E1-Standards. Es werden hier zwar nach dem Stand der Technik im Wesentlichen auch aminoplastische Bindemittel eingesetzt, die jedoch aufgrund des deutlich reduzierten molaren Verhältnisses (MV) von Formaldehyd (F) zu Harnstoff (U) bzw. Amin(d)-Äquivalenten (statt U formal (NH₂)₂) und der damit verbundenen, niedrigeren Reaktivität mit einer bedeutend geringeren Pressgeschwindigkeit, gleichbedeutend mit wesentlich höheren Produktionskosten verarbeitet werden müssen.

Weiters können zur Herstellung von Formkörpern mit verringerter Formaldehydemission formaldehydfreie Bindemittel angewendet werden. Bei diesen ist technisch einzig das PMDI (Polymeres Diphenylmethandiisocyanat) erwähnenswert. Dieses ist jedoch weder in ausreichender Menge am Markt verfügbar, noch bietet es ein für Standard-Platten akzeptables Kostenprofil.

Ein weiteres, aus dem Stand der Technik bekanntes Verfahren zur Verringerung der Abgabe von Formaldehyd aus einem Formkörper ist der Einsatz sogenannter Fänger. Diese, wie beispielsweise Harnstoff, reagieren mit dem bei der Pressung bzw. Lagerung entstehenden Formaldehyd und führen dadurch zu einer Absenkung der Formaldehyd-Emission. Der Einsatz von Harnstoff-Lösung führt dabei jedoch letztlich einfach zu einer Reduktion des Molverhältnisses und somit auch zu einer Reduktion der Pressgeschwindigkeit. Der Einsatz von pulverförmigem Harnstoff löst dieses Problem nur teilweise.

Nachteilig an bekannten Formaldehyd-Fängern ist, dass diese bereits in hohem Ausmaß während des Aushärtevorganges (d.h. zu Beginn der Heißpressvorgangs, bei kontinuierlichen Pressen also im vorderen Teil der Presse) mit Formaldehyd reagieren. Dadurch wird die Reaktivität, d.h. die Aushärtegeschwindigkeit und somit die Pressgeschwindigkeit der Platte verschlechtert, was einen wesentlichen Kostenfaktor darstellt. Hinzu kommt, dass dadurch im Extremfall auch die Festigkeit der hergestellten Platte verschlechtert wird, was einen wesentlichen Qualitätsfaktor darstellt.

Eine Verbesserung gelingt hier durch den Einsatz von "Schutzschichten" zur Abdeckung der Fängerpartikel. Dabei werden - wie z.B. in der EP 0 341 569 vorgeschlagen - teilweise unter Pressbedingungen aufschmelzende Wachse eingesetzt, welche den Fänger zum gewünschten Zeitpunkt freisetzen. Dieses Verfahren ist jedoch im Verhältnis zur Wirkung aufwendig und teuer und hat sich deshalb in der Praxis bisher nicht durchsetzen können.

Die DE 1 653 167 Al beschreibt ein Verfahren zur Herstellung von Spanplatten mit verminderter nachträglichere Formaldehydabspaltung. Als formaldehydbindende Stoffe werden solche eingesetzt, die unter der Bedingung der Spanplattenherstellung Formaldehyd langsamer zu binden vermögen, als es der Kondensationsgeschwindigkeit des verwendeten Harzes unter den angewendeten Bedingungen entspricht. Als geeignete formaldehydbindende Stoffe werden unter anderem Melamin und Dibutylthioharnstoff genannt.

Eine Aufgabe der Erfindung besteht daher darin, ein Verfahren zur Herstellung eines Formkörpers aus cellulosehaltigem Material und einem Formaldehyd enthaltenden Bindemittel sowie einen damit hergestellten Formkörper bereitzustellen, wobei die Reduzierung der Formaldehydemission durch einen Fänger erfolgt, bei dem die aus dem Stand der Technik bekannten Nachteile behoben oder zumindest teilweise behoben sind.

Diese Aufgabe wird erfindungsgemäß durch ein Verfahren gemäß Anspruch 1, einen Holzwerkstoff gemäß Anspruch 35 sowie durch die Verwendung einer Substanz gemäß Anspruch 42 gelöst. Vorteilhafte Weiterbildungen der Erfindung enthalten die Merkmale der Unteransprüche.

Das erfindungsgemäße Verfahren sieht vor, dass das Heißpressen in Gegenwart mindestens eines Harnstoff- und/oder Melaminderivates durchgeführt wird. Dabei verbleibt das Harnstoff- und/oder Melaminderivat nach dem Heißpressen vorzugsweise zumindest teilweise chemisch unverändert im Formkörper.

Erfindungsgemäß wurde festgestellt, dass sich Harnstoff- und/oder Melaminderivate hervorragend als Fängersubstanzen in Holzwerkstoffen eignen. Die in dem erfindungsgemäßen Verfahren verwendeten Harnstoff- und/oder Melaminderivate zeichnen sich durch eine gegenüber Harnstoff verminderte Löslichkeit in Wasser aus.

Ohne sich auf eine bestimmt Theorie festlegen zu wollen, kann die Wirkungsweise der erfindungsgemäß eingesetzten Fängersubstanzen wie folgt erklärt werden: Die erfindungsgemäß verwendeten Harnstoff- und/oder Melaminderivate sind aufgrund ihrer geringeren Löslichkeit in Wasser nur bedingt in der Lage, schnell mit Formaldehyd zu reagieren. Auf diese Weise verbleibt nach dem Zeitpunkt, zu dem der Formkörper die Heißpresse verlässt, mindestens ein Teil des Fängers in dem fertigen Formkörper und steht für eine zwar geringere, aber langzeitbeständige Fängerwirkung zur Verfügung.

Die während des Aushärtevorganges (Heißpressen) gebildete Formaldehydmenge pro Zeiteinheit ist in der Regel deutlich größer, als die in der fertigen Platte verbleibende bzw. langfristig freigesetzte Formaldehydmenge. Für die Langzeitemission verbleibt also ein Überschuss an Fänger, welcher so in der Lage ist permanent Formaldehyd abzufangen. Die Löslichkeit einer Verbindung ist normalerweise in deutlich geringerem Ausmaß von der Temperatur abhängig als die Reaktionsgeschwindigkeit. Während der Aushärtung wird daher trotz der hohen Temperatur in der Regel nur wenig Formaldehyd an den Fänger gebunden.

Der vorliegenden Erfindung liegt nunmehr einerseits die Erkenntnis zugrunde, dass ein zeitlich auf die Aushärtungs- sprich Pressbedingungen abgestimmtes Freisetzen des Fängers notwendig ist, um der Problematik der "frühzeitigen Formaldehyd-Reduktion" zu entgehen. Andererseits geht die Erfindung davon aus, dass ein - gegenüber dem nach der Aushärtung verbleibenden "Restformaldehyd" - stöchiometrischer Überschuss an Fänger wünschenswert ist, um auch im weiteren Verlauf der Lagerung bzw. bestimmungsgemäßen Nutzung des fertigen Holzwerkstoffes eine formaldehyd-reduzierende Wirkung zu gewährleisten,

Vorteilhaft an dem erfindungsgemäßen Verfahren ist insbesondere, dass die am Beginn der Plattenproduktion stehende Aushärtung nahezu ungestört rasch ablaufen kann, da noch ausreichend Formaldehyd zur schnellen und vollständigen Bindemittelreaktion zur Verfügung steht. Im weiteren Verlauf der Pressung wird durch die zunehmende Lösung des Harnstoff- und/oder Melaminderivates die Emission von Formaldehyd reduziert. Gleichzeitig verbleibt unverbrauchtes Harnstoff- und/oder Melaminderivat quasi als Depot in dem Formkörper und steht daher durch langsame Freisetzung/Aktivierung für eine langanhaltende Fängerwirkung zur Verfügung. Dies stellt eine wesentliche Verbesserung gegenüber den aus dem Stand der Technik bekannten Verfahren zur Formaldehydreduzierung, insbesondere gegenüber der Direktzugabe von Formaldehyd-Fängern wie Harnstoff, dar.

Erfindungsgemäß können prinzipiell beliebige Harnstoff- bzw, Melaminderivate eingesetzt werden, sofern sie die erfindungsgemäß geforderten geringen Löslichkeiten aufweisen. Harnstoff selbst bzw. Melamin selbst gelten jedoch nicht als Harnstoff- bzw. Melaminderivat im Sinne dieser Erfindung. Gemäß einer bevorzugten Ausführungsform der Erfindung werden solche Harnstoff- und Melaminderivate eingesetzt, die nach dem Heißpressen in einer Menge von 0,1 bis 20 Gew.%, insbesondere von 0,5 bis 10 Gew.%, vorzugsweise von 1 bis 5 Gew.%, besonders bevorzugt von 2 bis 4 Gew.%, bezogen auf die Festharzmenge des eingesetzten Bindemittels, im Formkörper verbleiben.

Erfindungsgemäß geeignete Harnstoffderivate sind solche, die eine Löslichkeit in Wasser bei 20 °C von 0,00001 bis 600 g/l, insbesondere von 0,0001 bis 200 g/l, vorzugsweise von 0,001 bis 100 g/l, besonders bevorzugt 0,001 bis 20 g/l aufweisen.

Geeignete Harnstoffderivate sind insbesondere solche, die ausgewählt sind aus der Gruppe bestehend aus Biuret, Triuret, Tetrauret, Pentauret, Hexauret, Methoxycarbonylharnstoff, Ethoxycarbonylharnstoff, tert.-Butylharnstoff, Bis-1,4-butyldiureid und Acetylendiharnstoff sowie deren Salzen und Derivaten.

Als Biuretderivate kommen insbesondere in Frage Methoxycarbonylbiuret, Ethoxycarbonylbiuret, 1-Methylbiuret, 1-Ethylbiuret, 1-Propylbiuret, Acetylbiuret, Diacetylbiuret, 1,1-Dimethylbiuret, Ethylendibiuret und/oder 1,2-Diethylbiuret sowie Salze von diesen Verbindungen.

Als Triuretderivate kommen insbesondere in Frage 3-Methyltriuret, 3-Ethyltriuret, 3-Methoxytriuret und/oder 1,1-Dimethyltriuret sowie Salze von diesen Verbindungen.

Erfindungsgemäß geeignete Melaminderivate sind solche, die eine Löslichkeit in Wasser bei 20 °C von weniger als 3,1 g/l, insbesondere weniger als 2 g/l aufweisen.

Geeignete Melaminderivate sind insbesondere solche, die ausgewählt sind aus der Gruppe bestehend aus Melam, Melem, Ammelin, Ammelid, Acetoguanamin, Caprinoguanamin, Benzoguanamin und deren Derivaten und Salzen.

Das Heißpressen erfolgt vorzugsweise bei einer Temperatur von 60 bis 250 °C, insbesondere von 90 bis 220 °C.

Das Harnstoff- und/oder Melaminderivat kann zumindest teilweise mit einem Überzug versehen sein (Coaten), wodurch die Morphologie, insbesondere die Rieselfähigkeit, die Reaktivität und/oder die Wasserlöslichkeit des Derivats beeinflusst werden kann. Als Überzug kann beispielsweise Kieselsäure, insbesondere hochdisperse Kieselsäure, eingesetzt werden.

Als Harnstoff- und/oder Melaminderivat kommen alle Substanzen in Frage, die geeignet sind, allein und/oder in Gegenwart von weiteren Substanzen und/oder Katalysatoren Formaldehyd und/oder andere flüchtige organische Verbindungen im Formkörper zu binden. Der erfindungsgemäß eingesetzte Formaldehydfänger kann aus einer einzelnen chemischen Substanz bestehen. Der Formaldehydfänger kann jedoch auch aus zwei oder mehreren Komponenten bestehen, die gemeinsam die Bindung des Formaldehyds bzw. einer anderen flüchtigen organischen Verbindung bewirkt.

Eine weitere bevorzugte Ausführungsform der Erfindung sieht vor, dass das Harnstoff- und/oder Melaminderivat zumindest teilweise mikroverkapselt ist. Das mikroverkapselte Harnstoff- und/oder Melaminderivat kann während oder nach dem Heißpressen zumindest teilweise freigegeben und dadurch Formaldehyd und oder andere flüchtige organische Substanzen binden.

Vorzugsweise wird das Harnstoff- und/oder Melaminderivat in einer Menge von 0,01 bis 50 Gew.%, insbesondere 0,05 bis 10 Gew.%, besonders bevorzugt 0,1 bis 3 Gew.%, bezogen auf die Masse des Feststoffgehaltes des Bindemittels, eingesetzt.

Das Harnstoff- und/oder Melaminderivat kann in den Formkörper in verschiedenster Weise eingebracht werden, insbesondere in Form eines Feststoffes. Es ist möglich, das Harnstoff- und/oder Melaminderivat vor dem Heißpressen dem Bindemittel zuzugeben. Ebenso ist es möglich, das Harnstoff- und/oder Melaminderivat vor dem Heißpressen in das beleimte cellulosehaltige Material einzubringen. Schließlich kann das Harnstoff- und/oder Melaminderivat auch vor dem Heißpressen in das noch unbeleimte cellulosehaltige Material eingebracht werden. Das Einbringen des Harnstoff- und/oder Melaminderivates in das beleimte oder unbeleimte cellulosehaltige Material kann durch verschiedenste Weise, inbesondere durch Eintragen, Einblasen, Aufstreuen und/oder Aufsprühen erfolgen.

Das Harnstoff- und/oder Melaminderivat ist vorzugsweise geeignet, die Formaldehyd-Emission des Holzwerkstoffs zu reduzieren. Diese Wirkung muss jedoch nicht auf Formaldehyd beschränkt sein. Das Harnstoff- und/oder Melaminderivat kann ferner auch geeignet sein, die Emission des Holzwerkstoffs bezüglich zumindest einer weiteren flüchtigen Verbindung zu reduzieren. Besonders erwähnt seien hier die unter dem Begriff "VOC - Volatile Organic Compounds" verstandenen Verbindungen, wie beispielsweise Aldehyde, Ketone, Terpene, veschiedene organische Säuren sowie Mischungen daraus, insbesondere Hexanal. Denkbar ist darüber hinaus auch der Einsatz eines Harnstoff- und/oder Melaminderivates, das geeignet ist, die Emission von Alkoholen, Estern, aliphatischen Kohlenwasserstoffen, aromatischen Kohlenwasserstoffen und/oder Halogenkohlenwasserstoffen zu reduzieren.

Die Auswahl des Bindemittels ist nicht beschränkt. Vielmehr kommen als Bindemittel die üblichen für derartige Zwecke eingesetzten Bindemittel in Betracht. Geeignete Bindemittel sind beispielsweise Harnstoff-Formaldehyd-Leime (UF), Melamin-Formaldehyd-Leime (MF), Phenol-Formaldehydleime (PF), Bindemittel auf Basis von Isocyanat (z.B. PMDI), Bindemittel auf Basis von Acrylaten, Melamin-Harnstoff-Formaldehyd-Leime (MUF), Melamin-Harnstoff-Phenol-Formaldehyd-Leime (MUPF) sowie Gemischen hiervon.

Gemäß einer bevorzugten Ausführungsform der Erfindung wird das Bindemittel in einer Menge von 1 bis 20 Gew.%, insbesondere 5 bis 15 Gew.%, als Festharz bezogen auf die Trockenmasse des cellulosehaltigen Materials eingesetzt.

Als cellulosehaltiges Material können beliebige cellulosehaltige Materialien, insbesondere Holzspäne, Holzfasern, Holzstrands und/oder Mischungen davon eingesetzt werden. Grundsätzlich kann für das kleinstückige Material neben cellulosehältigem Material auch jeglicher andere organische oder anorganische Rohstoff eingesetzt werden, der zur Bildung eines Formkörpers geeignet ist. Kleinstückiges Kunststoffmaterial, auch aus der Wiederverwertung gewonnen oder auch jegliche mineralische Teilchen können mit dem Verfahren zu einem Formkörper verarbeitet werden.

Mit dem erfindungsgemäßen Verfahren lassen sich beliebige Holzwerkstoffe herstellen. Das erfindungsgemäße Verfahren ist besonders geeignet zur Herstellung von Holzverbundwerkstoffen wie Span-, Faser- (z.B. MDF oder HDF) oder OSB-Platten.

Gemäß einer Variante der Erfindung ist der durch das Verfahren hergestellte Holzwerkstoff mehrlagig ausgebildet. Dabei kann der Precursor in einer oder mehreren Lagen des Holzwerkstoffs zugegeben werden. In den unterschiedlichen Lagen des Holzwerkstoffs können ferner gleiche oder unterschiedliche Bindemittel eingesetzt werden.

Das Verleimen des cellulosehaltigen Materials erfolgt mit üblichen Vorrichtungen. Vorzugsweise erfolgt das Verleimen mittels einer Beleimvorrichtung, die eine kontinuierliche Beleimung im Durchlauf ermöglicht.

Das Heißpressen erfolgt mit üblichen Pressvorrichtungen. Vorzugsweise erfolgt das Heißpressen in einer Taktpresse und/oder in einer kontinuierlich arbeitenden Presse. Üblicherweise erfolgt das Heißpressen bei einer Temperatur von 100 bis 250 °C, insbesondere von 150 bis 230 °C.

Gegenstand der Erfindung ist ferner ein Holzwerkstoff, der nach einem Verfahren gemäß einem der Ansprüche 1 bis 34 erhältlich ist.

Gemäß einer bevorzugten Ausführungsform der Erfindung handelt es sich bei dem Holzwerkstoff um eine Spanplatte, eine Faserplatte, insbesonders eine HDF- oder eine MDF-Platte, oder eine OSB-Platte, insbesondere eine mehrlagige OSB-Platte.

Der erfindungsgemäße Holzwerkstoff weist vorzugsweise bei Prüfung nach der Perforator-Methode gemäß EN 120 (1992) einen Perforatorwert kleiner oder gleich 6,5 mg, bevorzugt kleiner oder gleich 3,5 mg, besonders bevorzugt kleiner oder gleich 2,5 mg bezogen auf 100 g atro Platte, auf.

Der erfindungsgemäße Holzwerkstoff weist ferner vorzugsweise bei Prüfung nach der Desiccator-Methode gemäß JIS A 1460 (2001) eine Formaldehydemission kleiner oder gleich 1,5 mg/l, bevorzugt kleiner oder gleich 0,3 mg/l, besonders bevorzugt kleiner oder gleich 0,2 mg/l, auf.

Der erfindungsgemäße Holzwerkstoff weist ferner vorzugsweise bei Prüfung nach der Prüfkammer-Methode gem. EN 717-1 (2004) eine Formaldehydkonzentration kleiner oder gleich 0,10 ppm, bevorzugt kleiner oder gleich 0,05 ppm, besonders bevorzugt kleiner oder gleich 0,03 ppm, auf.

Der erfindungsgemäße Holzwerkstoff weist ferner vorzugsweise bei Prüfung nach der Gasanalyse-Methode gem. EN 717-2 (1994) einen Gasanalysewert kleiner oder gleich 3,5 mg/m²h, bevorzugt kleiner oder gleich 1,8 mg/m²h, besonders bevorzugt kleiner oder gleich 1,0 mg/m²h, auf.

Gegenstand der Erfindung ist auch die Verwendung von Harnstoffderivaten mit einer Löslichkeit in Wasser bei 20 °C von weniger als 600 g/l zur Verringerung der Emission von flüchtigen organischen Verbindungen, insbesondere von Formaldehyd, bei Holzwerkstoffen

Gegenstand der Erfindung ist schließlich auch die Verwendung von Melaminderivaten mit einer Löslichkeit in Wasser bei 20 °C von weniger als 3,1 g/l zur Verringerung der Emission von flüchtigen organischen Verbindungen, insbesondere von Formaldehyd, bei Holzwerkstoffen

Nachfolgend wird die Erfindung anhand von Ausführungsbeispielen näher beschrieben.

### Beispiel 1

Zur Herstellung einer Spanplatte werden etwa 25% Laubholzspäne, 65% Nadelholzspäne und 10 % Späne aus Altholz getrocknet und in Deck- und Mittelschichtfraktionen gesiebt. Als Bindemittel wird ein Harnstoff-Formaldehydharzleim (UF) eingesetzt. Über eine Dosiereinrichtung und ein nachgeschaltetes Förderband wird in den jeweiligen Massestrom der Späne der Deckschichten und der Mittelschicht ein erfindungsgemäßer Fänger eingestreut. Anschließend werden Deckschicht-, Mittelschicht- und wieder Deckschichtspäne auf ein Formband zu einem dreischichtig ausgebildeten Kuchen gestreut. Danach gelangt der Kuchen in eine Taktpresse und wird hier bei etwa 210°C zu einer 18 mm dicken Platte verpresst. Die so erhaltene Platte weist eine Rohdichte von ca. 680 kg/m³ bei 5,2% Restfeuchte, bezogen auf die Darrmasse der Platte, auf.

Zur Bestimmung der Formaldehydemission der Platte erfolgt eine Prüfung nach der Prüfkammermethode gemäß EN 717-1, nach der Perforatormethode gemäß EN 120 sowie nach der Desiccator-Methode gemäß JIS A 1460. Als weitere Platteneingenschaften werden jeweils die Biege- und die Querzugfestigkeit sowie die Dickenquellung ermittelt. Die erhaltenen Werte sind in Tabelle 1 dargestellt.

**Tabelle 1 (Spanplatte)**

| Fängersubstanz | Harnstoff/ Biuret/ Triuret 100/0/0 | Harnstoff/ Biuret/ Triuret 77/19/4 | Harnstoff/ Biuret/ Triuret 72/21/7 |
|---|---|---|---|
| Molverhältnis des Bindemittel (UF) | 1,06 | 1,06 | 1,06 |
| Bindemittelzugabe DS angegeben als Festharz bezogen auf atro Span | 11% | 11% | 11% |
| Bindemittelzugabe MS angegeben als Festharz bezogen auf atro Span | 8% | 8% | 8% |
| Preßfaktor (Preßzeit/Plattendicke) | 9,1 | 8,3 | 9,0 |
| Fängerzugabe DS bezogen auf Festharz Bindemittel | 3,0 | 3,0 | 3,0 |
| Fängerzugabe MS bezogen auf Festharz Bindemittel | 0,5 | 1,5 | 1,5 |
| Formaldehydkonzentration in ppm gem. EN 717-1 (Prüfkammermethode) | 0,04 | 0,03 | 0,02 |
| Perforatorwert in mg gem. EN 120 (Perforator-Methode) | 5,9 | 5,4 | 4,8 |
| Formaldehydemission in mg/l gem. JIS A 1460 (Desiccator-Methode) | 1,0 | 0,9 | 0,7 |
| Biegefestigkeit gem. EN 310 in N/mm² | 18,7 | 19,4 | 19,1 |
| Querzugfestigkeit gem. EN 319 in N/mm² | 0,61 | 0,72 | 0,74 |
| Dickenquellung gem. EN 317 in % | 27 | 26 | 23 |

### Beispiel 2

Zur Herstellung einer Faserplatte werden Hackschnitzel aus Nadelholz gereinigt, hydrothermisch aufgeschlossen und anschließend in einem Refiner zerfasert. In der nachfolgenden blow-line wird dann ein Harnstoff-Melamin-Formaldyhdharzleim (UMF) als Bindemittel zugegeben. Die Fasern gelangen dann über einen Fasertrockner zum sogenannten Streubunker, in dem eine letzte Bevorratung vor der Streumaschine stattfindet. Der erfindungsgemäße Fänger wird am Austrag des Streubunkers über eine Dosiervorrichtung und eine Einblasvorrichtung zugegeben, wobei zur verbesserten Verteilung eine Mischung von Fänger- und einer weiteren Substanz zugegeben wird. Anschließend werden die Fasern auf ein Formband gestreut und in einer Vorpresse vorverdichtet. In einer Doppelbandpresse erfolgt dann bei erhöhtem Druck und erhöhter Temperatur die Aushärtung des Bindemittels sowie die Verdichtung zu einer HDF-Platte mit einer Dicke von 6,8 mm und einer Rohdichte von 880 kg/m³ bei einer Restfeuchte von 5,8 % bezogen auf die Darrmasse der fertigen Platte.

Zur Bestimmung der Formaldehydemission der Platte erfolgt die Prüfung nach der Prüfkammermethode gemäß EN 717-1, nach der Perforatormethode gemäß EN 120 sowie nach der Desiccator-Methode gemäß JIS A 1460. Weiters wurden jeweils die Biege- und die Querzugfestigkeit sowie die Dickenquellung ermittelt. Die erhaltenen Werte sind in Tabelle 2 dargestellt.

**Tabelle 2 (Faserplatte)**

| Fängersubstanz | Harnstoff/ Biuret/ Triuret 100/0/0 | Harnstoff/ Biuret/ Triuret 77/19/4 | Harnstoff/ Biuret/ Triuret 72/21/7 |
|---|---|---|---|
| Molverhältnis des Bindemittel (UMF) | 1,00 | 1,03 | 1,03 |
| Melamingehalt des Bindemittel (UMF) | 3% | 5% | 7% |
| Bindemittelzugabe angegeben als Festharz bezogen auf atro Faser | 12% | 10,5% | 14,5% |
| Preßfaktor (Preßzeit/Plattendicke) | 7,2 | 6,8 | 6,2 |
| Fängerzugabe bezogen auf Festharz Bindemittel | 3,0 | 3,5 | 4,5 |
| Formaldehydkonzentration in ppm gem. EN 717-1 (Prüfkammermethode) | 0,04 | 0,03 | 0,03 |
| Perforatorwert in mg gem. EN 120 (Perforator-Methode) | 7,1 | 3,1 | 2,9 |
| Formaldehydemission in mg/l gem. JIS A 1460 (Desiccator-Methode) | 1,4 | 0,8 | 0,7 |
| Biegefestigkeit gem. EN 310 in N/mm² | 39 | 32 | 36 |
| Querzugfestigkeit gem. EN 319 in N/mm² | 0,61 | 0,64 | 0,69 |
| Dickenquellung gem. EN 317 in % | 21 | 19 | 16 |

### Beispiel 3

Zur Herstellung einer OSB-Platte werden mit einem sogenannten Flaker aus Kiefern-Stammholz Strands mit einer Dicke von ca. 0,5, einer Breite von etwa 15 und einer Länge von etwa 110 mm hergestellt und in einem Trommeltrockner auf eine Feuchte von etwa 4 bis 5,5 %, bezogen auf atro Holz, getrocknet. Anschließend wird das Feingut weitgehend abgetrennt und die verbleibenden Strands werden nach deren Größe in Deck- und Mittelschichtstrands sortiert. Unmittelbar vor dem Eintritt der Strands in die Beleimvorrichtung, dem sogenannten "coil-blender", wird jeweils über eine Stopfschnecke ein erfindungsgemäßer Fänger beigegeben. Nach der Beleimung der Deckschichtstrands mit einem Melamin-Harnstoff-Phenol-Formaldehydharzleim (MUPF) und der Mittelschichtstrands mit einem Bindemittel auf Isocyanatbasis(PMDI) gelangen die mit dem Fänger versehenen und beleimten Deck- und Mittelschichtstrands, dann über einen Streubunker zur Streumaschine. Hier werden die Deckschicht- Mittelschicht- und wiederum Deckschichtstrands auf ein Formband zu einem dreilagigen Schichtaufbau gelegt, wobei auf eine längs- / quer- / längsgerichtete Ausrichtung zur Verbesserung der mechanischen Eigenschaften der fertigen Platte, geachtet wird. Die Anteile der verschiedenen Lagen betragen etwa 30% Deckschicht-, 40% Mittelschicht- und wiederum 30% Deckschichtstrands. Die gebildete Matte gelangt dann in eine Doppelbandpresse wo die eigentliche Verpressung zu einer OSB-Platte mit einer Dicke von 16 mm und einer Dichte von etwa 660 kg/m³ bei einer Restfeuchte von ca. 11 % bezogen auf die Darrmasse, erfolgt.
Zur Bestimmung der Formaldehydemission der Platte erfolgt eine Prüfung nach der Perforatormethode gemäß EN 120 sowie nach der Desiccator-Methode gemäß JIS A 1460. Weiters wird die Biege- und die Querzugfestigkeit sowie die Dickenquellung ermittelt. Die erhaltenen Werte sind in Tabelle 3 dargestellt.

**Tabelle 3 (OSB-Platte)**

| Fängersubstanz | Harnstoff/ Biuret/ Triuret 100/0/0 | Harnstoff/ Biuret/ Triuret 77/19/4 | Harnstoff/ Biuret/ Triuret 72/21/7 |
|---|---|---|---|
| Molverhältnis des DS-Bindemittel (MUPF) | 1,09 | 1,04 | 1,15 |
| Melamingehalt des Bindemittel DS (MUPF) | 23% | 21% | 25% |
| Bindemittelzugabe DS angegeben als Festharz bezogen auf atro Span | 6,0% | 7,8% | 7,8 |
| Bindemittelzugabe MS angegeben als Festharz bezogen auf atro Span | 4,1% | 4,4% | 4,1 |
| Preßfaktor (Preßzeit/Plattendicke) | 9,3 | 9,5 | 8,6 |
| Fängerzugabe DS bezogen auf Festharz Bindemittel | 4,0% | 6,2 | 3,5 |
| Fängerzugabe MS bezogen auf Festharz Bindemittel | 0% | 4,0 | 3,5 |
| Perforatorwert in mg gem. EN 120 (Perforator-Methode) | 2,9 | 1,6 | 1,8 |
| Formaldehydemission in mg/l gem. JIS A 1460 (Desiccator-Methode) | 0,6 | 0,2 | 0,3 |
| Biegefestigkeit in der Hauptbelastungsrichtung gem. EN 310 in N/mm² | 37,6 | 34,2 | 40,2 |
| Querzugfestigkeit gem. EN 319 in N/mm² | 0,66 | 0,51 | 0,79 |
| Dickenquellung gem. EN 317 in % | 9,4 | 9,9 | 8,3 |

### Beispiel 4

Nachfolgend wird die Wirkung der erfindungsgemäßen Harnstoff- und/oder Melaminderivate als FormaldehydFänger anhand einer Beispielrechnung für Biuret und Triuret erläutert:
Der Gehalt an freiem Formaldehyd in einem Bindemittel ist temperaturabhängig und kann bei hoher Temperatur mit 5% angenommen werden. Bei einer Spanplatte mit 10% Beleimungsgrad würden somit 0,5% Formaldehyd in der Platte frei vorliegen. Die Beleimfeuchte einer Spanplatte liegt bei etwa 10%. Nach der Presse liegt die Feuchte unter 5%, es kann also angenommen werden, dass maximal 5% Wasser nicht gasförmig während der Pressung vorliegen. Die Löslichkeit von Biuret beträgt unter den vorherrschenden Bedingungen etwa 30%, es könnten in der Platte also höchstens 1,5% Biuret gelöst vorliegen. Aufgrund der molaren Gewichtsverhältnisse (Formaldehyd 30g/mol, Biuret 103g/mol) wären die beiden Substanzen also etwa stöchiometrisch äquivalent vorliegend. Um die Verfügbarkeit des Biuret also noch weiter abzusenken, kann das Biuret mit hydrophober, hochdisperser Kieselsäure innig vermischt werden.

Die "abgelagerte" Spanplatte hat nach der Disiccator-Methode eine Formaldehyd-Emission von unter 1 mg/l, was also etwa 0,2 mg Formaldehyd in 24 Stunden entspricht. Für diesen geringen "Massenstrom" reicht die geringe Löslichkeit des Biuret in der Ausgleichsfeuchte des Wassers aus.

Noch besser ausgeprägt ist die schlechte Kurzzeitverfügbarkeit, d.h. Löslichkeit, bei Triuret, welches sich nur zu 0,0025 g pro Liter Wasser löst.

## Patentansprüche

1. Verfahren zur Herstellung eines Formkörpers aus einem Gemisch von cellulosehaltigem Material und mindestens einem Formaldehyd enthaltenden Bindemittel durch Heißpressen in Gegenwart mindestens eines Harnstoff- und/oder Melaminderivates, welches nach dem Heißpressen zumindest teilweise unverändert im Formkörper verbleibt, wobei das Harnstoffderivat eine Löslichkeit in Wasser bei 20 °C von 0,00001 bis 600 g/l, insbesondere von 0,0001 bis 200 g/l, vorzugsweise von 0,001 bis 100 g/l, besonders bevorzugt 0,001 bis 20 g/l aufweist und das Melaminderivat eine Löslichkeit in Wasser bei 20 °C von weniger als 3,1 g/l, insbesondere weniger als 2 g/l aufweist, und wobei das Harnstoff- und/oder Melaminderivat nach dem Heißpressen in einer Menge von 0,1 bis 20 Gew.%, bezogen auf die Festharzmenge des eingesetzten Bindemittels, im Formkörper verbleibt, **dadurch gekennzeichnet, dass** das Harnstoffderivat ausgewählt ist aus der Gruppe bestehend aus Biuret, Triuret, Tetrauret, Pentauret, Hexauret, Methoxycarbonylharnstoff, Ethoxycarbonylharnstoff, tert.-Butylharnstoff, Bis-1,4-butyldiureid und Acetylendiharnstoff sowie deren Salze und Derivate und/oder dass das Harnstoffderivat ausgewählt ist aus der Gruppe bestehend aus Biuret, Methoxycarbonylbiuret, Ethoxycarbonylbiuret, 1-Methylbiuret, 1-Ethylbiuret, 1-Propylbiuret, Acetylbiuret, Diacetylbiuret, 1,1-Dimethylbiuret, Ethylendibiuret, 1,2-Diethylbiuret und Salzen davon und/oder dass das Harnstoffderivat ausgewählt ist aus der Gruppe bestehend aus Triuret, 3-Methyltriuret, 3-Ethyltriuret, 3-Methoxytriuret, 1,1-Dimethyltriuret und Salzen davon und/oder dass das Melaminderivat ausgewählt ist aus der Gruppe bestehend aus Melam, Melem, Ammelin, Ammelid, Acetoguanamin, Caprinoguanamin, Benzoguanamin und deren Derivaten und Salzen.

2. Verfahren nach Anspruch 1, **dadurch gekennzeichnet, dass** das Harnstoff- und/oder Melaminderivat nach dem Heißpressen in einer Menge von 0,5 bis 10 Gew.%, vorzugsweise von 1 bis 5 Gew.%, besonders bevorzugt von 2 bis 4 Gew.%, bezogen auf die Festharzmenge des eingesetzten Bindemittels, im Formkörper verbleibt.

3. Verfahren nach Anspruch 1 oder 2, **dadurch gekennzeichnet, dass** das Harnstoff- und/oder Melaminderivat geeignet ist, die Formaldehyd-Emission des Formkörpers zu reduzieren.

4. Verfahren nach einem der vorstehenden Ansprüche, **dadurch gekennzeichnet, dass** das Harnstoff- und/oder Melaminderivat zumindest teilweise mit einem Überzug versehen ist.

5. Verfahren nach einem der vorstehenden Ansprüche, **dadurch gekennzeichnet, dass** der Überzug die Morphologie, insbesondere die Rieselfähigkeit, die Reaktivität und/oder die Wasserlöslichkeit des Precursors beeinflusst.

6. Verfahren nach Anspruch 1, **dadurch gekennzeichnet, dass** als Überzug Kieselsäure, insbesondere hochdisperse Kieselsäure, vorgesehen ist.

7. Verfahren nach einem der vorstehenden Ansprüche, **dadurch gekennzeichnet, dass** das Harnstoff- und/oder Melaminderivat zumindest teilweise mikroverkapselt ist.

8. Verfahren nach Anspruch 7, **dadurch gekennzeichnet, dass** das mikroverkapselte Harnstoff- und/oder Melaminderivat beim Heißpressen zumindest teilweise freigegeben wird.

9. Verfahren nach einem der vorstehenden Ansprüche, **dadurch gekennzeichnet, dass** neben dem Harnstoff- und/oder Melaminderivat noch ein weiterer Formaldehydfänger eingesetzt wird.

10. Verfahren nach einem der vorstehenden Ansprüche, **dadurch gekennzeichnet, dass** das Harnstoff- und/oder Melaminderivat in einer Menge von 0,01 bis 50 Gew.%, insbesondere 0,05 bis 10 Gew.%, besonders bevorzugt 0,1 bis 3 Gew.% bezogen auf die Masse des Feststoffgehaltes des Bindemittels, eingesetzt wird.

11. Verfahren nach einem der vorstehenden Ansprüche, **dadurch gekennzeichnet, dass** das Harnstoff- und/oder Formaldehydderivat in den Formkörper in Form eines Feststoffes und/oder einer Lösung und/oder in bei Raumtemperatur flüssiger Form eingebracht wird.

12. Verfahren nach einem der vorstehenden Ansprüche, **dadurch gekennzeichnet, dass** das Harnstoff- und/oder Formaldehydderivat vor dem Heißpressen dem Bindemittel zugegeben wird.

13. Verfahren nach einem der vorstehenden Ansprüche, **dadurch gekennzeichnet, dass** das Harnstoff- und/oder Formaldehydderivat vor dem Heißpressen in das beleimte cellulosehaltige Material eingebracht wird.

14. Verfahren nach einem der vorstehenden Ansprüche, **dadurch gekennzeichnet, dass** das Harnstoff- und/oder Formaldehydderivat vor dem Heißpressen in das noch unbeleimte cellulosehaltige Material eingebracht wird.

15. Verfahren nach Anspruch 13 oder 14, **dadurch gekennzeichnet, dass** das Einbringen des Harnstoff- und/oder Formaldehydderivates durch Eintragen, Einblasen, Aufstreuen und/oder Aufsprühen erfolgt.

16. Verfahren nach einem der vorstehenden Ansprüche, **dadurch gekennzeichnet, dass** das Harnstoff- und/oder Formaldehydderivat geeignet ist, die Emission zumindest einer weiteren flüchtigen Verbindung zu reduzieren.

17. Verfahren nach Anspruch 16, **dadurch gekennzeichnet, dass** die weiteren flüchtigen Verbindungen ausgewählt sind aus der Gruppe bestehend aus Aldehyden, Ketonen, Terpenen, organischen Säuren und Mischungen davon.

18. Verfahren nach Anspruch 16 oder 17, **dadurch gekennzeichnet, dass** es sich bei der zumindest einen weiteren flüchtigen Verbindung um Hexanal handelt.

19. Verfahren nach einem der vorstehenden Ansprüche, **dadurch gekennzeichnet, dass** als Bindemittel mindestens ein Bindemittel ausgewählt wird aus der Gruppe bestehend aus Harnstoff-Formaldehyd-Leime (UF), Melamin-Formaldehyd-Leime (MF), Phenol-Formaldehydleime (PF), Bindemittel auf Basis von Isocyanat (z.B. PMDI), Bindemittel auf Basis von Acrylaten, Melamin-Harnstoff-Formaldehyd-Leime (MUF), Melamin-Harnstoff-Phenol-Formaldehyd-Leime (MUPF) und Gemischen hiervon.

20. Verfahren nach einem der vorstehenden Ansprüche, **dadurch gekennzeichnet, dass** das Bindemittel in einer Menge von 1 bis 20 Gew.%, insbesondere 5 bis 15 Gew.%, als Festharz bezogen auf die Trockenmasse des cellulosehaltigen Materials eingesetzt wird.

21. Verfahren nach einem der vorstehenden Ansprüche, **dadurch gekennzeichnet, dass** als cellulosehaltiges Material Holzspäne, Holzfasern, Holzstrands und/oder Mischungen davon eingesetzt werden.

22. Verfahren nach einem der vorstehenden Ansprüche, **dadurch gekennzeichnet, dass** der Holzwerkstoff ein Holzverbundwerkstoff, insbesondere eine Spanplatte, eine Faserplatte (z.B. MDF oder HDF) oder eine OSB-Platte, ist.

23. Verfahren nach einem der vorstehenden Ansprüche, **dadurch gekennzeichnet, dass** der Holzwerkstoff mehrlagig ausgebildet ist.

24. Verfahren nach Anspruch 23, **dadurch gekennzeichnet, dass** in mindestens einer der Lagen des Holzwerkstoffs ein Harnstoff- und/oder Formaldehydderivat zugegeben wird.

25. Verfahren nach Anspruch 23 oder 24, **dadurch gekennzeichnet, dass** in unterschiedlichen Lagen des Holzwerkstoffs unterschiedliche Bindemittel eingesetzt werden.

26. Verfahren nach einem der vorstehenden Ansprüche, **dadurch gekennzeichnet, dass** das Verleimen des cellulosehaltigen Materials mittels einer Beleimvorrichtung erfolgt, die eine kontinuierliche Beleimung im Durchlauf ermöglicht.

27. Verfahren nach einem der vorstehenden Ansprüche, **dadurch gekennzeichnet, dass** das Heißpressen in einer Taktpresse und/oder in einer kontinuierlich arbeitenden Presse erfolgt.

28. Verfahren nach einem der vorstehenden Ansprüche, **dadurch gekennzeichnet, dass** das Heißpressen bei einer Temperatur von 100 bis 250°C, insbesondere von 150 bis 230°C erfolgt.

29. Holzwerkstoff, erhältlich nach einem Verfahren gemäß einem der Ansprüche 1 bis 28.

30. Holzwerkstoff nach Anspruch 29, **dadurch gekennzeichnet, dass** der Holzwerkstoff eine Spanplatte oder eine Faserplatte, insbesonders eine HDF- oder eine MDF-Platte, ist.

31. Holzwerkstoff nach Anspruch 29 oder 30, **dadurch gekennzeichnet, dass** der Holzwerkstoff eine OSB-Platte, insbesondere eine mehrlagige OSB-Platte, ist.

32. Holzwerkstoff nach einem der Ansprüche 29 bis 31, **dadurch gekennzeichnet, dass** dieser bei Prüfung nach der Perforator-Methode gemäß EN 120 (1992) einen Perforatorwert kleiner oder gleich 6,5 mg, bevorzugt kleiner oder gleich 3,5 mg, besonders bevorzugt kleiner oder gleich 2,5 mg bezogen auf 100 g atro Platte, aufweist.

33. Holzwerkstoff nach einem der Ansprüche 29 bis 32, **dadurch gekennzeichnet, dass** dieser bei Prüfung nach der Desiccator-Methode gemäß JIS A 1460 (2001) eine Formaldehydemission kleiner oder gleich 1,5 mg/l, bevorzugt kleiner oder gleich 0,3 mg/l, besonders bevorzugt kleiner oder gleich 0,2 mg/l, aufweist.

34. Holzwerkstoff nach einem der Ansprüche 29 bis 33, **dadurch gekennzeichnet, dass** dieser bei Prüfung nach der Prüfkammer-Methode gem. EN 717-1 (2004) eine Formaldehydkonzentration kleiner oder gleich 0,10 ppm, bevorzugt kleiner oder gleich 0,05 ppm, besonders bevorzugt kleiner oder gleich 0,03 ppm, aufweist.

35. Holzwerkstoff nach einem der Ansprüche 29 bis 34, **dadurch gekennzeichnet, dass** dieser bei Prüfung nach der Gasanalyse-Methode gem. EN 717-2 (1994) einen Gasanalysewert kleiner oder gleich 3,5 mg/m²h, bevorzugt kleiner oder gleich 1,8 mg/m²h, besonders bevorzugt kleiner oder gleich 1,0 mg/m²h, aufweist.

36. Verwendung von Harnstoffderivaten mit einer Löslichkeit in Wasser bei 20 °C von weniger als 600 g/l, ausgewählt aus der Gruppe bestehend aus Biuret, Triuret, Tetrauret, Pentauret, Hexauret, Methoxycarbonylharnstoff, Ethoxycarbonylharnstoff, tert.-Butylharnstoff, Bis-1,4-butyldiureid und Acetylendiharnstoff sowie deren Salze und Derivate und/oder ausgewählt aus der Gruppe bestehend aus Biuret, Methoxycarbonylbiuret, Ethoxycarbonylbiuret, 1-Methylbiuret, 1-Ethylbiuret, 1-Propylbiuret, Acetylbiuret, Diacetylbiuret, 1,1-Dimethylbiuret, Ethylendibiuret, 1,2-Diethylbiuret und Salzen davon und/oder ausgewählt aus der Gruppe bestehend aus Triuret, 3-Methyltriuret, 3-Ethyltriuret, 3-Methoxytriuret, 1,1-Dimethyltriuret und Salzen davon, zur Verringerung der Emission von Formaldehyd beim Heißpressen in der Herstellung von Holzwerkstoffen aus einem Gemisch aus cellulosehaltigem Material und mindestens einem Formaldehyd enthaltenden Bindemittel.

37. Verwendung gemäß Anspruch 36, **dadurch gekennzeichnet, dass** das Harnstoffderivat eine Löslichkeit in Wasser bei 20 °C von weniger als 100 g/l aufweist.

38. Verwendung von Melaminderivaten mit einer Löslichkeit in Wasser bei 20 °C von weniger als 3,1 g/l, ausgewählt aus der Gruppe bestehend aus Melam, Melem, Ammelin, Ammelid, Acetoguanamin, Caprinoguanamin, Benzoguanamin und deren Derivaten und Salzen, zur Verringerung der Emission von Formaldehyd beim Heißpressen in der Herstellung von Holzwerkstoffen aus einem Gemisch aus cellulosehaltigem Material und mindestens einem Formaldehyd enthaltenden Bindemittel.

## Claims

1. Method for producing a molding from a mixture of cellulose-containing material and at least one formaldehyde-containing binder by hot pressing in the presence of at least one urea and/or melamine derivative, which remains at least partly unchanged in the molding after the hot pressing, wherein the urea derivative has a solubility in water at 20°C of from 0.00001 to 600 g/l, in particular from 0.0001 to 200 g/l, preferably from 0.001 to 100 g/l, particularly preferably 0.001 to 20 g/l, and the melamine derivative has a solubility in water at 20°C of less than 3.1 g/l, in particular less than 2 g/l, and wherein the urea and/or melamine derivative remains in the molding in a quantity of from 0.1 to 20 wt% relative to the quantity of solid resin of the binder used after hot pressing, **characterised in that** the urea derivative is selected from the group consisting of biuret, triuret, tetrauret, pentauret, hexauret, methoxycarbonyl urea, ethoxycarbonyl urea, tert. butyl urea, bis-1,4-butyl di ureide and acetylene diurea as well as their salts and derivatives and/or **in that** the urea derivative is selected from the group consisting of biuret, methoxycarbonyl biuret, ethoxycarbonyl biuret, 1-methyl biuret, 1-ethyl biuret, 1-propyl biuret, acetyl biuret, diacetyl biuret, 1,1-dimethyl biuret, ethylene dibiuret, 1,2-diethyl biuret, and salts thereof and/or **in that** the urea derivative is selected from the group consisting of triuret, 3-methyl triuret, 3-ethyl triuret, 3-methoxy triuret, 1,1-dimethyl triuret, and salts thereof and/or **in that** the melamine derivative is selected from the group consisting of melam, melem, ammeline, ammelide, acetoguanamine, caprinoguanamine, benzoguanamine, and their derivatives and salts.

2. Method according to claim 1, **characterised in that** the urea and/or melamine derivative remains in the molding in a quantity of from 0.5 to 10 wt% after hot pressing, preferably from 1 to 5 wt%, particularly preferably from 2 to 4 wt%, relative to the quantity of solid resin of the binder used.

3. Method according to claim 1 or 2, **characterised in that** the urea and/or melamine derivative is suitable for reducing the formaldehyde emission of the moulding.

4. Method according to any one of the preceding claims, **characterised in that** the urea and/or melamine derivative is at least partially provided with a coating.

5. Method according to any one of the preceding claims, **characterised in that** the coating affects the morphology, in particular the pourability, the reactivity, and/or the water solubility of the precursor.

6. Method according to claim 1, **characterised in that** silicic acid, in particular highly-dispersed silicic acid, is provided for as coating.

7. Method according to any one of the preceding claims, **characterised in that** the urea and/or melamine derivate is at least partially microencapsulated.

8. Method according to claim 7, **characterised in that** the microencapsulated urea and/or melamine derivative is at least partially released during the hot pressing.

9. Method according to any one of the preceding claims, **characterised in that** an additional formaldehyde scavenger is used in addition to the urea and/or melamine derivative.

10. Method according to any one of the preceding claims, **characterised in that** the urea and/or melamine derivative is used in a quantity of from 0.01 to 50 wt%, in particular 0.05 to 10 wt%, particularly preferably 0.1 to 3 wt%, relative to the mass of the solid content of the binder.

11. Method according to any one of the preceding claims, **characterised in that** the urea and/or formaldehyde derivative is introduced into the molding in the form of a solid and/or a solution and/or in a form that is liquid at room temperature.

12. Method according to any one of the preceding claims, **characterised in that** the urea and/or formaldehyde derivative is added to the binder prior to the hot pressing.

13. Method according to any one of the preceding claims, **characterised in that** the urea and/or formaldehyde derivative is introduced into the adhesive cellulose-containing material prior to the hot pressing.

14. Method according to any one of the preceding claims, **characterised in that** the urea and/or formaldehyde derivative is introduced into the still non-adhesive cellulose-containing material prior to the hot pressing.

15. Method according to claim 13 or 14, **characterised in that** the introduction of the urea and/or formaldehyde derivative is effected by filling, blowing into, sprinkling on and/or spraying on.

16. Method according to any one of the preceding claims, **characterised in that** the urea and/or formaldehyde derivative is suitable for reducing the emission of at least one additional volatile compound.

17. Method according to claim 16, **characterised in that** the additional volatile compounds are selected from the group consisting of aldehydes, ketones, terpenes, organic acids, and mixtures thereof.

18. Method according to claim 16 or 17, **characterised in that** the at least one additional volatile compound is hexanal.

19. Method according to any one of the preceding claims, **characterised in that** as binder, at least one binder is selected from the group consisting of urea formaldehyde glues (UF), melamine formaldehyde glues (MF), phenol formaldehyde glues (PF), binder based on isocyanate (e.g. PMDI), binder based on acrylates, melamine urea formaldehyde glues (MUF), melamine urea phenol formaldehyde glues (MUPF), and mixtures thereof.

20. Method according to any one of the preceding claims, **characterised in that** the binder is introduced in a quantity of from 1 to 20 wt%, in particular 5 to 15 wt%, as solid resin, relative to the dry mass of the cellulose-containing material.

21. Method according to any one of the preceding claims, **characterised in that** as cellulose-containing material wood chips, wood fibres, wood strands, and/or mixtures thereof are used.

22. Method according to any one of the preceding claims, **characterised in that** the wood material is a wood composite material, in particular a chipboard, a fibre board (e.g. MDF or HDF), or an OSB board.

23. Method according to any one of the preceding claims, **characterised in that** the wood material is designed to be multi-layered.

24. Method according to claim 23, **characterised in that** a urea and/or formaldehyde derivative is added to at least one of the layers of the wood material.

25. Method according to claim 23 or 24, **characterised in that** different binders are used in different layers of the wood material.

26. Method according to any one of the preceding claims, **characterised in that** gluing of the cellulose-containing material is carried out by means of a gluing device that enables a continuous gluing in continuous throughput.

27. Method according to any one of the preceding claims, **characterised in that** the hot pressing is carried out in a cycle press and/or in a continuously operating press.

28. Method according to any one of the preceding claims, **characterised in that** the hot pressing is carried out at a temperature of from 100 to 250°C, in particular from 150 to 230°C.

29. Wood material, obtainable according to a method according to any one of claims 1 to 28.

30. Wood material according to claim 29, **characterised in that** the wood material is a chipboard or a fibre board, in particular an HDF or an MDF board.

31. Wood material according to claim 29 or 30, **characterised in that** the wood material is an OSB board, in particular a multi-layered OSB board.

32. Wood material according to any one of claims 29 to 31, **characterised in that** when tested according to the perforator method according to EN 120 (1992), said wood material has a perforator value of less than or equal to 6.5 mg, preferably less than or equal to 3.5 mg, particularly preferably less than or equal to 2.5 mg relative to 100 g of absolutely dry board.

33. Wood material according to any one of claims 29 to 32, **characterised in that** when tested according to the desiccator method according to JIS A 1460 (2001), said wood material has a formaldehyde emission of less than or equal to 1.5 mg/l, preferably less than or equal to 0.3 mg/l, particularly preferably less than or equal to 0.2 mg/l.

34. Wood material according to any one of claims 29 to 33, **characterised in that** when tested according to the test chamber method according to EN 717-1 (2004), said wood material has a formaldehyde concentration of less than or equal to 0.10 ppm, preferably less than or equal to 0.05 ppm, particularly preferably less than or equal to 0.03 ppm.

35. Wood material according to any one of claims 29 to 34, **characterised in that** when tested according to the gas analysis method according to EN 717-2 (1994), said wood material has a gas analysis value of less than or equal to 3.5 mg/m²h, preferably less than or equal to 1.8 mg/m²h, particularly preferably less than or equal to 1.0 mg/m²h.

36. Use of urea derivatives with a solubility in water at 20°C of less than 600 g/l, selected from the group consisting of biuret, triuret, tetrauret, pentauret, hexauret, methoxycarbonyl urea, ethoxycarbonyl urea, tert. butyl urea, bis-1,4-butyl di ureide, and acetylene diurea, as well as their salts and derivatives and/or selected from the group consisting of biuret, methoxycarbonyl biuret, ethoxycarbonyl biuret, 1-methyl biuret, 1-ethyl biuret, 1-propyl biuret, acetyl biuret, diacetyl biuret, 1,1-dimethyl biuret, ethylene dibiuret, 1,2-diethyl biuret, and salts thereof, and/or selected from the group consisting of triuret, 3-methyl triuret, 3-ethyl triuret, 3-methoxy triuret, 1,1-dimethyl triuret, and salts thereof, for the reduction of the emission of formaldehyde during hot pressing in the production of wood materials from a mixture of cellulose-containing material and at least one formaldehyde-containing binder.

37. Use according to claim 36, **characterised in that** the urea derivative has a solubility in water at 20°C of less than 100 g/l.

38. Use of melamine derivatives with a solubility in water at 20°C of less than 3.1 g/l, selected from the group consisting of melam, melem, ammeline, ammelide, acetoguanamine, caprinoguanamine, benzoguanamine, and their derivatives and salts, for the reduction of emission of formaldehyde during hot pressing in the production of wood materials from a mixture of cellulose-containing material and at least one formaldehyde-containing binder.

## Revendications

1. Procédé de préparation d'un article moulé à partir d'un mélange de matériaux contenant de la cellulose et d'au moins un liant contenant du formaldéhyde, par pressage à chaud en présence d'au moins un dérivé d'urée et/ou de mélamine, qui après le pressage à chaud, reste au moins partiellement inchangé dans l'article moulé, où le dérivé d'urée présente une solubilité dans l'eau à 20°C située dans l'intervalle allant de 0,00001 à 600 g/l, en particulier de 0,0001 à 200 g/l, de préférence de 0,001 à 100 g/l, de manière particulièrement préférée de 0,001 à 20 g/l, et où le dérivé de mélamine présente une solubilité dans l'eau à 20°C inférieure à 3,1 g/l, en particulier inférieure à 2 g/l, et où le dérivé d'urée et/ou de mélamine reste dans l'article moulé après le pressage à chaud, en une quantité allant de 0,1 à 20% en poids, sur base de la quantité résinique solide du liant mis en oeuvre, **caractérisé en ce que** le dérivé d'urée est choisi parmi le groupe consistant en un biuret, un triuret, un tétrauret, un pentauret, un hexauret, une méthoxycarbonylurée, une éthoxycarbonylurée, une t-butylurée, un bis-1,4-butyldiuréide et un acéthylènediurée, ainsi que leurs sels et dérivés, et/ou le dérivé d'urée est choisi parmi le groupe consistant en le biuret, le méthoxycarbonylbiuret, l'éthoxycarbonylbiuret, le 1-méthylbiuret, le 1-éthylbiuret, le 1-propylbiuret, l'acétylbiuret, le diacétylbiuret, le 1,1-diméthyl-biuret, l'éthylènedibiuret, le 1,2-diéthylbiuret et leurs sels, et/ou **en ce que** le dérivé d'urée est choisi parmi le groupe consistant en le triuret, le 3-méthyltriuret, le 3-éthyltriuret, le 3-méthoxytriuret, le 1,1-diméthyltriuret et leurs sels, et/ou **en ce que** le dérivé de mélamine est choisi parmi le groupe consistant en le mélam, le mélem, l'ammeline, l'ammélide, l'acétoguanamine, la caprinoguanamine, la benzoguanamine et leurs sels et dérivés.

2. Procédé selon la revendication 1, **caractérisé en ce que** le dérivé d'urée et/ou de mélamine reste dans l'article moulé après le pressage à chaud, en une quantité située dans l'intervalle allant de 0,5 à 10% en poids, de préférence de 1 à 5% en poids, de manière particulièrement préférée, de 2 à 4% en poids, sur base de la quantité de résine solide du liant mis en oeuvre.

3. Procédé selon la revendication 1 ou 2, **caractérisé en ce que** le dérivé d'urée et/ou de mélamine est approprié pour réduire l'émission de formaldéhyde par l'article moulé.

4. Procédé selon l'une des revendications précédentes, **caractérisé en ce que** le dérivé d'urée et/ou de mélamine est muni au moins partiellement d'un enduit.

5. Procédé selon l'une des revendications précédentes, **caractérisé en ce que** l'enduit influence la morphologie, en particulier la fluidité, la réactivité et/ou la solubilité du précurseur.

6. Procédé selon la revendication 1, **caractérisé en ce que** l'on utilise l'acide silicique, en particulier l'acide silicique fortement dispersé, comme enduit.

7. Procédé selon l'une des revendications précédentes, **caractérisé en ce que** le dérivé d'urée et/ou de mélamine est au moins partiellement micro-encapsulé.

8. Procédé selon la revendication 7, **caractérisé en ce que** le dérivé d'urée et/ou de mélamine micro-encapsulé est au moins partiellement libéré lors du pressage à chaud.

9. Procédé selon l'une des revendications précédentes, **caractérisé en ce qu'**outre le dérivé d'urée et/ou de mélamine, un autre piège de formaldéhyde est également utilisé.

10. Procédé selon l'une des revendications précédentes, **caractérisé en ce que** le dérivé d'urée et/ou de mélamine est mis en oeuvre en une quantité située dans l'intervalle allant de 0,01 à 50% en poids, en particulier de 0,05 à 10% en poids, de manière particulièrement préférée de 0,1 à 3% en poids, sur base de la masse de la teneur en matières solides du liant.

11. Procédé selon l'une des revendications précédentes, **caractérisé en ce que** le dérivé d'urée et/ou de formaldéhyde est incorporé à l'article moulé sous forme d'une matière solide et/ou d'une solution et/ou sous une forme liquide à température ambiante.

12. Procédé selon l'une des revendications précédentes, **caractérisé en ce que** le dérivé d'urée et/ou de formaldéhyde est ajouté au liant avant le pressage à chaud.

13. Procédé selon l'une des revendications précédentes, **caractérisé en ce que** le dérivé d'urée et/ou de formaldéhyde est incorporé au matériau contenant de la cellulose encollé, avant le pressage à chaud.

14. Procédé selon l'une des revendications précédentes, **caractérisé en ce que** le dérivé d'urée et/ou de formaldéhyde est incorporé au matériau contenant de la cellulose non encore encollé, avant le pressage à chaud.

15. Procédé selon la revendication 13 ou 14, **caractérisé en ce que** l'incorporation du dérivé d'urée et/ou de formaldéhyde est réalisée par addition, insufflation, saupoudrage et/ou pulvérisation.

16. Procédé selon l'une des revendications précédentes, **caractérisé en ce que** le dérivé d'urée et/ou de formaldéhyde est approprié pour réduire l'émission d'au moins un autre composé volatil.

17. Procédé selon la revendication 16, **caractérisé en ce que** l'autre composé volatil est choisi parmi le groupe consistant en des aldéhydes, des cétones, des terpènes, des acides organiques et leurs mélanges.

18. Procédé selon la revendication 16 ou 17, **caractérisé en ce que** l'autre composé volatil consiste au moins en l'hexanal.

19. Procédé selon l'une des revendications précédentes, **caractérisé en ce que** l'on choisit comme liant, au moins un liant du groupe consistant en les colle urée-formaldéhyde (UF), les colles mélamine-formaldéhyde (MF), les colles phénol-formaldéhyde (PF), un liant à base d'isocyanate (par exemple, PMDI), un liant à base d'acrylate, les colles mélamine-urée-formaldéhyde (MUF), les colles mélamine-urée-phénol-formaldéhyde (MUPF) et leurs mélanges.

20. Procédé selon l'une des revendications précédentes, **caractérisé en ce que** le liant est mis en oeuvre en une quantité située dans l'intervalle allant de 1 à 20% en poids, en particulier de 5 à 15% en poids, sous forme de résine solide et sur base de la masse sèche du matériau contenant de la cellulose.

21. Procédé selon l'une des revendications précédentes, **caractérisé en ce que** l'on utilise des copeaux de bois, des fibres de bois, chute de scierie et/ou leurs mélanges comme matériau contenant de la cellulose.

22. Procédé selon l'une des revendications précédentes, **caractérisé en ce que** le matériau en bois est un matériau composite en bois, en particulier un panneau de particules, un panneau de fibres de bois par exemple, MDF ou HDF) ou un panneau OSB.

23. Procédé selon l'une des revendications précédentes, **caractérisé en ce que** le matériau en bois présente plusieurs couches.

24. Procédé selon la revendication 23, **caractérisé en ce qu'**un dérivé d'urée et/ou de formaldéhyde est ajouté à au moins une des couches du matériau en bois.

25. Procédé selon la revendication 23 ou 24, **caractérisé en ce que** différents liants sont utilisés dans les différentes couches du matériau en bois.

26. Procédé selon l'une des revendications précédentes, **caractérisé en ce que** l'encollage du matériau contenant de la cellulose est réalisée au moyen d'un dispositif d'encollage, qui permet un encollage continu.

27. Procédé selon l'une des revendications précédentes, **caractérisé en ce que** le pressage à chaud est réalisé dans une presse cyclique et/ou une presse travaillant en continu.

28. Procédé selon l'une des revendications précédentes, **caractérisé en ce que** le pressage à chaud est réalisée à une température allant de 100 à 250°C, en particulier de 150 à 230°C.

29. Matériau en bois, pouvant être obtenu d'après un procédé selon l'une quelconque des revendications 1 à 28.

30. Matériau en bois selon la revendication 29, **caractérisé en ce que** le matériau en bois est un panneau de particules ou un panneau de fibres de bois, en particulier un panneau HDF ou MDF.

31. Matériau en bois selon la revendication 29 ou 30, **caractérisé en ce que** le matériau en bois est un panneau OSB, en particulier un panneau OSB multicouche.

32. Matériau en bois selon l'une des revendications 29 à 31, **caractérisé en ce que** celui-ci présente une valeur au perforateur inférieure ou égale à 6,5 mg, de préférence inférieure ou égale à 3,5 mg, de manière particulièrement préférée inférieure ou égale à 2,5 mg par rapport à 100 g de panneau sec, dans le test du procédé au perforateur selon EN 120 (1992).

33. Matériau en bois selon l'une des revendications 29 à 32, **caractérisé en ce que** celui-ci présente une émission de formaldéhyde inférieure ou égale à 1,5 mg/l, de préférence inférieure ou égale à 0,3 mg/l, de manière particulièrement préférée inférieure ou égale à 0,2 mg/l dans le test du procédé au dessiccateur selon JIS A 1460 (2001).

34. Matériau en bois selon l'une des revendications 29 à 33, **caractérisé en ce que** celui-ci présente une concentration en formaldéhyde inférieure ou égale à 0,10 ppm, de préférence inférieure ou égale à 0,05 ppm, de manière particulièrement préférée inférieure ou égale à 0,03 ppm, dans le test du procédé de chambre d'essai selon EN 717-1 (2004).

35. Matériau en bois selon l'une des revendications 29 à 34, **caractérisé en ce que** celui-ci présente une valeur d'analyse des gaz inférieure ou égale à 3,5 mg/m²h, de préférence inférieure ou égale à 1,8 mg/m²h, de manière particulièrement préférée inférieure ou égale à 1,0 mg/m²h, dans le test du procédé d'analyse des gaz selon EN 717-2 (1994).

36. Utilisation de dérivés d'urée ayant une solubilité dans l'eau à 20°C inférieure à 600 g/l, choisi parmi le groupe consistant en un biuret, un triuret, un tétrauret, un pentauret, un hexauret, une méthoxycarbonylurée, une éthoxycarbonylurée, une t-butylurée, un bis-1,4-butyldiuréide et un acéthylènediurée, ainsi que leurs sels et dérivés, et/ou choisi parmi le groupe consistant en le biuret, le méthoxycarbonylbiuret, l'éthoxycarbonylbiuret, le 1-méthylbiuret, le 1-éthylbiuret, le 1-propylbiuret, l'acétylbiuret, le diacétylbiuret, le 1,1-diméthyl-biuret, l'éthylènedibiuret, le 1,2-diéthylbiuret et leurs sels, et/ou choisi parmi le groupe consistant en le triuret, le 3-méthyltriuret, le 3-éthyltriuret, le 3-méthoxytriuret, le 1,1-diméthyltriuret et leurs sels, pour diminuer l'émission de formaldéhyde lors du pressage à chaud pendant la préparation de matériaux en bois à partir d'un mélange de matériau contenant de la cellulose et d'au moins un liant contenant du formaldéhyde.

37. Utilisation selon la revendication 36, **caractérisée en ce que** le dérivé d'urée présente une solubilité dans l'eau à 20°C inférieure à 100 g/l.

38. Utilisation de dérivés de mélamine ayant une solubilité dans l'eau à 20°C inférieure à 3,1 g/l, choisi parmi le groupe consistant en le mélam, le mélem, l'ammeline, l'ammélide, l'acétoguanamine, la caprinoguanamine, la benzoguanamine et leurs sels et dérivés, pour diminuer l'émission de formaldéhyde lors du pressage à chaud pendant la préparation de matériaux en bois à partir d'un mélange de matériaux contenant de la cellulose et d'au moins un liant contenant du formaldéhyde.
